# EUROPEAN PATENT APPLICATION

(11) **EP 1 734 265 A2**
(43) Date of publication of application: **20.12.2006**
(21) Application number: 06115258.3
(22) Date of filing: 09.06.2006
(51) Int. Cl.: F16B 19/10

(54) **A blind rivet, removal system and related method**

(30) Priority: 14.06.2005 GB 0512124
(71) Applicant: Newfrey LLC, Newark, Delaware 19711 (US)
(72) Inventor: Jones, Steven Victor, Great Barr, B43 5LN (GB); Davies, John David, Birmingham, B20 3AP (GB)
(74) Representative: Schwarz-Haar, Gabriele

(57) **Abstract**

The invention relates to a blind rivet, related method of removal and a tool.

The removable blind rivet (10) comprises: a rivet body (12) that receives a mandrel (14). The rivet body (12) has a flange (16) with a line of weakness (19) formed therein. The line of weakness (19) is adapted to shear under an axial load, whereby the flange (16) is severed, substantially as a single item, from the rivet body (12).

The invention extends to a tool for removing the rivet the tool comprising: a body and a punch surface, the punch surface is adapted to apply an axial force to a region of the flange, whereby the flange is severed from the rivet body in the form of an annulus, leaving a hollow rivet body that may be removed from a workpiece.

The advantage of the invention is that it enables the flange to be removed form the rivet body as a single item.

## Description

### Background

The present invention relates to a blind rivet and more particularly to a blind rivet, blind rivet removal system and related method of rivet removal.

To appreciate the difficulties associated with the removal of blind rivets it is beneficial to understand the general methods used in the installation of, and the resulting structure of, the blind rivet.

A blind rivet is usually a two part assembly comprising a rivet body and a mandrel. The rivet body is elongate and generally has a flange head. In operation the rivet body is inserted into a previously prepared hole in an application or workpiece so that the flange of the rivet body abuts an exposed side of the workpiece, often referred to as the operator side. The exposed mandrel stem is inserted into a pulling jaw system of a rivet setting tool and setting the rivet involves tensioning the mandrel by the setting tool. As tension increases, the mandrel head enters the rivet body and progresses towards the flange. As this occurs, the rivet body expands radially to fill the hole in the workpiece or application. When the mandrel head reaches the proximity of the blind side face of the workpiece, the diameter of the rivet body has substantially increased to clamp the application parts one to another. The mandrel head, unable to progress further, is arrested. In break neck rivets further tensioning load may be increased until the mandrel breaks at a predetermined load. The setting is completed.

The set rivet thus comprises: a rivet body, with its flange firmly abutted against the operator-side of the work piece; a radially expanded body, extending through the workpiece to the blind-side. The remainder of the mandrel, the mandrel head portion, remains in situ once the rivet has been set. Setting of the rivet occurs by fracturing the mandrel at a predetermined location such as a weakening groove.

There are, however, alternative designs of blind rivets, such as rivets with a high shear resistance, where the remaining mandrel head portion includes a long head-shaft portion that supports the full length of the set rivet including the flange portion. These high shear resistance mandrels are usually formed from a high tensile steel wire. The remaining mandrel head portion of the mandrel is retained in the set rivet body, such that the broken end is close to, or even flush with, the outer surface of the flange of the rivet.

A blind rivet was traditionally designed and intended as a permanent fixing and is not normally removed, except in the case of repair to the application or where the rivet has been incorrectly installed and requires replacement. However, rivets can also be used as a temporary holding and clamping means, where two or more parts of an application are being glued together. Such temporary rivets therefore require subsequent removal, once the glue has attained full adhesive strength.

Blind rivet removal has typically employed a power-operated tool to extract the rivet, ideally as a single, or substantially single, piece from an installed blind rivet from the application or workpiece.

If rivet removal is attempted using a twist drill, damage may be caused to the workpiece, for example, as a result of the drill touching the hard mandrel end and being deflected off axis of the rivet body. Such damage can entail expensive refurbishment. Even where the mandrel head portion is short, the drill point can still be deflected by the retained mandrel portion.

More recently rivet removal is also of increasing concern due to developing legislation in respect of the recycling of automotive materials after the vehicle has reached the end of its life. It is important, therefore, that some components (such as unused airbags) can be easily removed. Since these components are usually assembled using blind rivets, taking advantage of low cost assembly methods, it necessarily follows that these components should also be easily and cost effectively removable by easy removal of the blind rivets.

In these instances where rivet removal is necessary, the rivet flange has been removed by using a metal working chisel, or metal cutting pincers or by removing the centre of the flange with a twist drill of a diameter that is substantially the same as the rivet body diameter. After the flange has been removed, the portion of the rivet body that remains in the application can be pushed out of the application, away from the operator, for example by using a fat-ended punch of substantially the same diameter as the rivet body.

However, removing the flange of the rivet, using a metal removal drill, was labour intensive and costly in terms of time. Also swarf or chips were often created which were difficult to collect. There is also a risk of potentially hazardous swarf or remnants not being removed. This swarf or chips posed a particular problem if electronic or electrical hardware is present, as their presence could cause short circuits or cause corrosion and environmental problems.

Another problem encountered by existing metal removal methods is that after having drilled through the flange, a residual part of the flange, which is usually in the form of a ring or an annulus of material, comes away and surrounds the drill. This has required removal manually of the ring or annulus from the drill bit and has been time consuming and hazardous and entailed the use of finger protection or a tool to prevent fmgers being cut.

### Prior Art

There have been various techniques proposed for the removal of rivet flanges by metal removal using a metal twist drill or a milling cutter end mill. One such technique is described in published Japanese Patent Application number JP2000 084755 (Ricoh KK). The technique described is one of several existing methods. There are others that are very similar and are well known by persons skilled in the art. However, this technique of rivet removal does present problems in that where the flange was drilled, and a metal removal drill (of substantially the same diameter as the body of the rivet) was used, there resulted unwanted swarf or chips. Removing this unwanted swarf and debris often proved difficult, labour intensive, removal of debris was potentially hazardous and unwanted swarf or chips was that they caused corrosion and environmental problems.

A method to overcome this problem is described in US Patent US 4,285,265 (Messerschmitt - Boelkow - Blohm). The method describes how a slot is formed in the flange in two places diametrically opposite one another so that the residual flange portion falls away in two pieces after it has been removed by the drill.

However, this again presents a problem, particularly in the aerospace industry, there remained the problem that all residual parts had to be found and accounted for, so that the risk of damage by particles was eliminated. This became a particularly laborious task when the rivet was used as a temporary fixing.

US Patents US 4,541,761 (USM Corporation) and US 4,436,467 (Larsson and Anderson) disclose methods of removing the head of the rivet by tearing the flange portion away from the rivet body; this is made possible by an annular weakening beneath the flange.

To remove this type of rivet, however, is problematic as the designs of blind rivets, such as rivets with a high shear resistance, where the remaining mandrel head portion includes a long head-shaft portion. Typically the head-shaft portion supports the full length of the set rivet (including the flange portion). These types of mandrels are usually formed from a high tensile steel wire. The remaining portion of the mandrel is retained in the set rivet body, such that the broken end portion is close to, or even flush with, the outer surface of the flange of the rivet.

It is an object of this invention to provide a blind rivet and a means of removing the blind rivet, such that the blind rivet is removed substantially in its entirety or entirely from the application or workpiece without damage to the application or workpiece.

It is a further object of this invention to provide a blind rivet that is removable without generating swarf and debris usually associated with removing the flange either singly or in two parts by the use of metal removal techniques.

It is a further object of this invention to provide a tool for removal of the aforementioned blind rivet.

It is a yet further object of this invention to provide a low cost blind rivet that once installed is capable of being removed by simple and low cost tools without damage to the application.

It is a still further object of this invention to provide a simple and effective means of removing the rivet, particularly the flange of the rivet body, so that subsequent removal of the rivet body from the application can be achieved without damage to the application.

### Summary of the Invention

According to a first aspect of the invention there is provided a removable blind rivet comprising: a rivet body which, in use, is adapted to receive a mandrel, the rivet body having a flange with a line of weakness formed therein, said line of weakness is adapted to shear under an axial load whereby the flange is severed, substantially as a single item, from the rivet body.

Preferably said line of weakness extends around a peripheral portion of the flange, which when circular, is defined as being generally an arcuate portion of the flange. Ideally the line of weakness extends around the complete circumference of the flange and has the same diameter as the outer surface of the rivet body.

The line of weakness may be defined by a plurality of discrete slots, indentations, grooves or by a continuous groove or channel.

The line of weakness may be defined in either an upper (exposed) or underside face of the flange. If the line of weakness is exposed on the upper side of the flange, the rivet when set can be clearly distinguished from non-removable rivets and mistakes in use can be recognised.

Upon application of a suitable force, shearing of the flange at the line of weakness, yields a flange remnant, usually in the form of an annular structure, and a hollow rivet body. As the severing of the annular flange portion from the rivet occurs in a predetermined manner, only two portions of waste material are generated. These can be readily collected an disposed of. For example, a vacuum pump can be applied to the removal tool which sucks them into a chamber for subsequent disposal.

An advantage of the invention is that access to the blind-side is not necessary since the rivet body does not need to be held by a pair of pliers squeezing the blind side of the rivet body in order to prevent it turning. This is often needed in other removal techniques, such as drilling the flange with a twist drill or rotating the head of the rivet, so as to achieve a rupturing of the rivet body from the flange.

According to a second aspect of the invention there is provided a method of forming a removable rivet comprising the steps of: forming a rivet body having a flange and forming a weakness in the flange which line of weakness extends around at least a portion of the flange, said flange when subjected to a shear force severs from the rivet body, at the line of weakness.

Ideally the weakness extends in a continuous arc so that the flange is severed from the rivet body, at the line of weakness so that it is in the form of an annulus.

According to another aspect of the invention there is provided a method of rivet removal comprising: directing an axial force onto the flange of a set rivet so that a shear force is applied parallel to an axial direction of the rivet, to a region of the flange, whereby the flange is severed form the rivet body in the form of an annulus, leaving a hollow rivet body that may be removed from a workpiece.

An advantage of the method of rivet removal is that only two items of waste are generated. There is no unexpected or irregular debris, such as chips or swarf that result from the usual metal removal methods. Furthermore there is little risk that the application can be damaged by a metal removal process. Also, the time needed to remove the rivet is substantially lower than the more usual techniques, with the added advantage that ruptured flanges can be easily and conveniently collected and disposed.

According to a yet further aspect of the invention there is provided a tool for removing a rivet comprising: a body and a punch surface, the punch surface is adapted to apply an axial force to a region of the flange, whereby the flange is severed from the rivet body in the form of an annulus, leaving a hollow rivet body that may be removed from a workpiece.

Preferably the tool has a locator which is shaped and dimensioned to be received by the hollow rivet body.

The removal tool may have a resiliently deformable means, such as a variable sprung or other mechanism, for applying a preset force to the rivet so as to be sufficient to remove the flange, whilst minimising any damage to the workpiece.

It is envisaged that by a simple hand tool being located in the flange of the rivet and a hammer blow to the tool is sufficient to separate the flange portion of the rivet body from the rivet body. Such rivet, therefore, is of relatively low cost since only a small and low cost change to manufacturing tooling is necessary. Also there are no supplementary operations required in its manufacture subsequent output and production costs do not differ from those of conventional rivets.

Preferred embodiments of the invention will now be described, by way of exemplary example only, and with reference to the Figures in which:

### Brief Description of the Figures

Figure 1 is a first embodiment of a removable rivet;
Figure 2 shows a second embodiment of a removable rivet;
Figure 3 is a third embodiment of a removable rivet;
Figure 4 is a diagrammatical, sectional view of the third embodiment of rivet set in a workpiece; and
Figures 5 and 6 show first and second stages of removal of the rivet, for example, by way of a punch tool.

### Detailed Description of Preferred Embodiments of the Invention

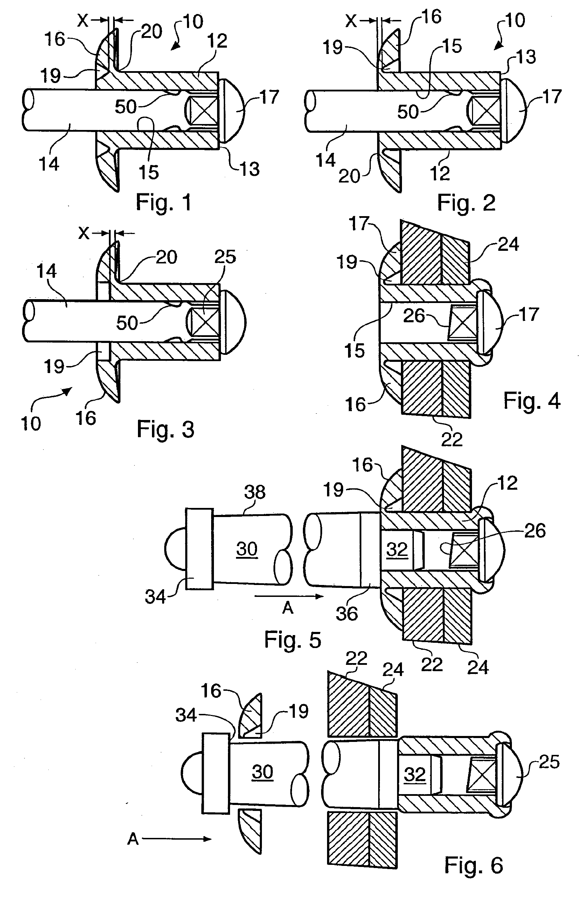

Referring to the Figures in general, and particularly to Figures 1 and 2, in which like parts bear the same reference numerals, there is shown a rivet 10 comprising a rivet body 12 through which there passes a mandrel 14. Mandrel 14 is assembled to the rivet body 12 in the conventional manner with the stem of the mandrel passing through a central bore 15 of the rivet body 12 such that mandrel head 17 abuts a blind-side end 13 of the rivet body 12.

Referring briefly to Figures 1 to 4, there is shown stages of setting a blind rivet 10. Rivet 10 is inserted into a setting tool (not shown) and introduced into a workpiece 22, 24 and set in the conventional manner, such that the mandrel head 17 is urged towards blind side surface of workpiece 24, so as to complete the setting. When the mandrel 14 breaks at weakening groove 50. Groove 50 may be a continuous circumferential groove or a series of indentations.

The rivet body 12 is characterised by a flange 16 into which an arcuate line of weakness 19 has been formed. This line of weakness 19 is shown as an annular V-shaped groove on the top surface of the rivet flange (Figure 1) and as an undercut groove 19 (in Figure 2) or could be defined by a plurality of discrete slots, indentations or grooves. The amount of material, at the narrowest region between the upper and lower surfaces of the flange 16, is shown as thickness x of material. This thickness x of the material, between the inner diameter of the weakness 19, is equal to, or substantially equal to, the outer diameter of the rivet body 12 such that there is defined a relatively thin web 20 of material that attaches the flange of the rivet to the rivet body 12.

A further embodiment is shown in Figure 3 where the flange 16 of the rivet 12 has a counterbore 19. The diameter of the counterbore 19 is substantially equal to the rivet body outer diameter. Thus again flange 16 is attached to the rivet body 12 by a thin web 20 of material, of thickness **x,** defining a region of reduced thickness. This design is easy to manufacture and material saving. For setting this rivet the setting tool preferably has a boss that enters the counterbore 19 and abuts upon the rivet body 12.

It is important that an annulus defined by the line weakness 19 is concentric about the axis of segmenting of the rivet so that the web 20 of material lines substantially co-axial with the outer surface of the rivet body 12. The reason for this is to maximise the stress experienced by the thin web of material 20 so that when a force is applied to the flange 16 in order to sever the flange 16 from the rivet body 12 when removal is desired.

It is envisaged that the thickness of the web of material x, in the embodiments shown, can vary depending upon the intended purpose of the rivet, the nature of a workpiece or application and tensile loads applied to set the rivet 10 and applied stresses experienced once set. For instance if the application 22, 24 is robust and the rivet flange 16 is to support a relatively high tensile load, the thickness of the web 20 may be relatively thick, say 30% of the flange thickness. If, however, the application 22, 24 is of relatively thin or ductile materials and the applied tensile load is small, then the web 20 thickness need only be small typically at 10% of the thickness of the flange 16.

Figure 4 shows the rivet 10 set in the application, comprising two sheets or plates of material 22 and 24. In practice the rivet 12 is assembled into a blind rivet setting tool in the normal manner such that the rivet assembly is entered into prepared holes in the application 22, 24 and by operating a setting tool (not shown). Upon setting, the rivet 10 draws together the plates 22 and 24, securing them prior to the mandrel 14 stem breaking at surface 26.

Spent portion of the stem (not shown) is discarded into a mandrel collection system (not shown) of the tool (not shown).

The removal sequence is shown in Figures 5 and 6. It is likely that during setting the groove in the flange of the rivet will partially fill with displaced material especially if the rivet body 12 is of a more ductile material such as aluminium but nevertheless the line of weakness which is dependent upon the web of attaching material still remains.

Referring to Figure 5 it will be appreciated that only a hammer (not shown) and simple punch 30 are required for the removal of the rivet body 12. Punch 30 is designed with a front or punch-end 36. An optional locator 32 is dimensioned to enter the rivet body bore 15, thereby aligning the outer diameter of the punch end 36 with the rivet body outer diameter and substantially colinear with the annular line of weakness 19.

In the embodiment shown in Figure 3, the location of the punch-end is achieved by the outer diameter of the punch end being located in the counterbore 19.

It is a further improvement of the punch 30, where the punch 30 is longitudinally tapered or stepped back in a reduced diameter 38 so that the punch is the largest diameter at 36. Completing the punch assembly is a cap 34 that is located around the smaller end of the punch to act as a retaining stop and fashioned to withstand hammer impact. The cap 34 can also be conveniently removed.

By locating the punch 30 against the rivet flange 16 such that the punch-end is resting against the rivet flange a blow from a hammer (not shown) causes the rivet body 12 to be driven forward away from the flange 16 rupturing the thin web 20 of material. The rivet body 12 is thus driven from the hole in the application 22, 24. At this instant the rivet flange 16 separates, as a result of the line of weakness 19, and is pushed in the opposite direction of arrow A, by virtue of rearwards facing taper 38 and is arrested by the cap 34.

Subsequent sheared-off flanges also collect around the punch, in this region of cap 34. When there are sufficient flanges collected the cap 34 surrounding the smaller end of the punch 30 is removed and the sheared or spent flanges 16 can be dispensed in appropriate containers.

The set rivet 10 is then divided into two pieces. The rivet body 12 is driven from the application and the flanges 16 collected without recourse to drilling and potential damage to the application 22. Thus an effective means of removing the rivet 10, using simple tools has been described and the cost of the rivet is substantially the same as that of standard rivets of the same size. Furthermore, the removed flanges 16 of the rivet can be accommodated automatically and disposed in an efficient, safe and tidy manner.

The invention has been described by way of example only and it will be appreciated that variation may be made to the embodiments without departing from the scope of the invention.

## Claims

1. A removable blind rivet (10) comprises: a rivet body (12) which, in use, is adapted to receive a mandrel (14), the rivet body (12) having a flange (16) with a line of weakness (19) formed therein, said line of weakness (19) is adapted to shear under an axial load, whereby the flange (16) is severed, substantially as a single item, from the rivet body (12).

2. A removable blind rivet according to claim 1 wherein the line of weakness (19) extends around a peripheral portion of the flange (16).

3. A removable blind rivet according to claim 2 wherein the flange (16) is circular and the line of weakness (19) is defined by one or more discrete slots, indentations or grooves around an arcuate portion of the flange.

4. A removable blind rivet according to claim 1 wherein the line of weakness (19) extends as a continuous circumferential groove around the complete circumference of the flange (16).

5. A removable blind rivet according to any preceding claim wherein the line of weakness (19) is defined in an upper face of the flange (16).

6. A removable blind rivet according to any of claims 1 to 4 wherein the line of weakness (19) is defined in an underside face of the flange (16).

7. A method of forming a removable rivet comprising the steps of: forming a rivet body having a flange and forming a weakness in the flange which line of weakness extends around at least a portion of the flange, said flange when subjected to a shear force severs from the rivet body, at the line of weakness.

8. A method according to claim 7 wherein the line of weakness extends in a continuous arc so that the flange is severed from the rivet body, at the line of weakness so that it is in the form of an annulus.

9. A method of rivet removal comprising: directing an axial force onto the flange of a set rivet so that a shear force is applied parallel to an axial direction of the rivet, to a region of the flange, whereby the flange is severed form the rivet body in the form of an annulus, leaving a hollow rivet body that may be removed from a workpiece.

10. A tool for removing a rivet comprising: a body and a punch surface, the punch surface is adapted to apply an axial force to a region of the flange, whereby the flange is severed from the rivet body in the form of an annulus, leaving a hollow rivet body that may be removed from a workpiece.

11. A tool according to claim 10 has a locator which is shaped and dimensioned to be received by the hollow rivet body.

12. A tool according to claim 11 wherein the removal tool has a resiliently deformable means for applying a preset force to the rivet so as to be sufficient to remove the flange, whilst minimising any damage to the workpiece.

13. A tool according to claim 12 wherein the resiliently deformable means includes a variable spring.
